Europäisches Patentamt

European Patent Office

Office européen des brevets

(19)

(11) Publication number: **0 260 923**
**A2**

(12) # EUROPEAN PATENT APPLICATION

(21) Application number: **87308125.1**

(22) Date of filing: **15.09.87**

(51) Int. Cl.⁴: **C 09 K 19/60**

(30) Priority: **17.09.86 US 908830**

(43) Date of publication of application:
**23.03.88 Bulletin 88/12**

(84) Designated Contracting States: **BE DE FR GB**

(71) Applicant: **MEDICAL INDICATORS (a limited partnership under US law)**
**450 Terhune Road**
**Princeton New Jersey 08540 (US)**

(72) Inventor: **Wistonsky, Robert J.**
**450 Terhune Road**
**Princeton, New Jersey 08540 (US)**

(74) Representative: **Harrison, Michael Robert et al**
**Urquhart-Dykes & Lord 5th Floor Tower House Merrion Way**
**Leeds, LS2 8PA (GB)**

(54) **Temperature sensing composition.**

(57) A temperature sensing composition and thermometer utilizing said composition wherein the temperature sensing composition comprises a cholesteric liquid crystal in combination with a first dye having a maximum absorption of about 540 to about 640 nanometers and a second dye having a maximum absorption of about 380 to about 520 nanometers. Each dye is present at about 0.02 to about 0.25 weight percent based on the liquid crystal. The ratio of first dye to second dye is preferably about 1:4 to about 4:1; more preferably about 1:1 to 4:1. The preferred dyes are oil soluble azo dyes.

EP 0 260 923 A2

**Description**

TEMPERATURE SENSING COMPOSITION (301-104)

BACKGROUND OF THE INVENTION

Mesomorphic or "liquid crystalline" materials have long been known and have been classified into three types; smectic, unematic and cholesteric. The cholesteric mesomorphic phase exhibits a number of optical properties which have attracted interest. One property is the scattering of white light, which property varies with temperature over a certain range, depending upon the particular chloesteric material.

This variable scattering of light is manifested as an apparent change in color of the cholesteric material and has been exploited for measuring transient changes in temperature occasioned by infrared radiation, microwave radiation, conduction, and convection. In this use the cholesteric material responds relatively rapidly so that a change in temperature quickly causes a change in the apparent color of the material.

Many attemps have been made to exploit these properties of liquid crystals and a large number of them have been successful.

One area which has attracted considerable attention is the possibility of constructing thermometric elements such as clinical thermometers which record changes in temperature by visual changes in a plurality of liquid crystals system, each of which responds to a different temperature, disposed in an orderly fashion on a suitable substrate. Despite major efforts, however, no suitable products have yet been developed.

A cholesteric liquid system, as the term is used in this disclosure, refers to a system comprising one or more materials which exhibit a cholesteric phase separately or in combination. While the system may contain only one cholesteric liquid crystal compound, it will normally contain at least two and usually three such compounds.

Cholesteric liquid systems are capable of changing from one color to another, say yellow to red, with changing temperatures. They may also change from colored to colorless at a fixed temperature. The former color change is a fleeting change while the crystals remain in the same phase. The latter is an hysteretic change in which the crystal system undergoes an isotropic change and becomes colorless. On cooling, the system passes through a focal conic phase in which the system is somewhat grayish in appearance. This phase can be maintained for a rather extended period of time provided the system is protected from mechanical stress.

There have been two principal difficulties which have retarded the development of useful thermometric elements. First, in the past, it has been necessary to form a number of different liquid crystal systems each one of which changes in color at a different temperature. As a result, in order to construct a thermometer capable of recording one half degree increments over the clinical range of 96.5°F to 104.5°F one must prepare seventeen different systems, each of which vary in the percentage composition of at least two or more components. Second, liquid crystals of the prior act have required a black or dark background against which to view the color change of the liquid crystal system. Such thermometers are unattractive from a consumer acceptance standpoint.

The first problem has largely been solved by the invention disclosed in U.S. Patent No. 3,974,317, incorporated herein by reference, to Edward N. Sharpless. The second problem has been attacked by researchers with varying degrees of success. The objective of their research was to attempt to develop liquid crystal systems which could be read against white or light colored background.

In one approach to a resolution of the dark background problem small particles of a black solid such as carbon black were dispersed into the liquid crystal; see, for example, U.S. Patent No. 3,620,889. Such an approach, however, has limited utility because the higher density black substances will flocculate and fall out of suspension. As a consequence, thermometers constructed utilizing such an approach have a limited stable shelf life ranging from a few hours to several days.

U.S. Patent No. 3,576,761 discloses a method which comprises dissolving a black dye into the liquid crystal system. The dyes disclosed as allegedly useful are diazo, indene or nigrosine dyes. The composition must include at least one cholesteryl halide. The useful dye concentration is disclosed to be from one percent to 50%; preferably from two to ten percent by weight. The preferred embodiment comprises six weight percent dye. It is alleged at the higher dye levels, i.e., greater than one percent, reversion of the color change is inhibited. At the dye levels taught by the 3,576,761 patent the clearing point at which the color change occurs are altered markedly, making it difficult to manufacture useful thermometers. Furthermore, thermometers utilizing the compositions of the disclosure are not useful for reusable thermometers since the liquid crystal must be agitated to cause it to revert to its first color, and hence, are suitable only for a single use, but only if they are protected from thermal abuse.

U.S. Patent 4,064,872 discloses a clinical thermometer manufactured using thin flexible films. The temperature indicating compositions are liquid crystals. The invention of the '872 patent permits the construction of an inexpensive all plastic thermometer.

SUMMARY OF THE INVENTION

It has surprisingly been found that a liquid crystal temperature measuring device which can be read against a white background can be prepared by mixing with the liquid crystal material, at least two dyes neither of which alone produces a useful effect. The thermometric compositions of this invention display a high contrast color change, when viewed against a white background between the liquid crystal state and the isotropic liquid state of the composition.

At least one of the dyes must have a maximum absorption band in the range of 540 to 640 nanometers and at least one dye must have an absorption band in the range of 480 to 520 nanometers.

BRIEF DESCRIPTION OF THE DRAWINGS

Figure I is a plan view of a thermometer.
Figure II is an elevation section of a thermometer pocket.
Figure III is a plot of inert additive concentration as a function of transition temperature.

DETAILED DESCRIPTION OF THE INVENTION

In the practice of this invention a wide range of cholestyric liquid crystals can be utilized. Illustrative non-limiting examples such liquid crystals are the alkyl or alkylene esters of the cholestyric compound, e.g. cholesteryl acetate, propionate, valerate, butyrate, hexanoate, octonoate, nonenoate, laurate, palmitate, caproate, undoedecenoate, oleate, caproate, etc. Similarly, alkylphenyl or aralkylesters can be utilized, e.g., cholesteryl benzoate, cinnamate, nitrobenzoate, phthalate, etc. The carbonates are also useful in the practice of this invention. Illustrative, non-limiting examples of such liquid crystals are cholesteryl oleyl carbonate cholesteryl methyl carbonate, the ethyl carbonates, n-propyl carbonates, cinnamyl carbonates, allyl carbonates, etc.

Particularly preferred cholesteryl compounds useful in the practice of this invention are those compounds disclosed in the 3,974,317 patent to Sharpless. These compounds include cholesteryl oleyl carbonate, cholesteryl chloride, sitosleryl-10-undecenoate, sitosteryl octanoate, cholesteryl nonanoate, sitosleryl acetate sitosteryl propionate, sitosteryl erucate, sitosteryl p-n pentylory benzoate, sitosteryl dichlorobenzate, sitosleryl chloride, cholesteryl 4-n-butoxy phenyl carbonate and cholesteryl laurate.

The preferred embodiment of this invention utilizes the liquid crystal systems of the 3,974,317 patent, incorporated by references, including the chemically inert component. For the purpose of completeness, selected portions of that patent are reproduced herein.

A special feature of the products of this invention is that all of the compositions in a particular product can have exactly the same color and exhibit exactly the same color change. This is an important advantage, since in prior art products different compositions have had different colors and different color changes. This has been a source of great difficulty, leading, for instance, to errors in reading clinical thermometers.

When used herein, the term "identical color" refers to colors which to the naked eye in white light appear to be the same. Slight differences, however, might appear if two or more liquid crystal systems were characterized with the aid of analytical instruments. It is a special feature of the products of this invention that over any given temperature range to be measured the color of at least two compositions will be identical. In most instances, all of the compositions will be identical in color. This is in sharp contrast to previously described thermometric elements, especially clinical thermometers where all of the compositions have been of clearly different colors of clearly different shades of the same color. This has led to confusion.

Of course, if a large temperature range is to be covered, it may be necessary or desirable to change the liquid crystal system, with the result that there may be two or more different colored systems in the same product, one to cover the lower end of the range, the other the upper end.

The clearing point of the same basic cholesteric liquid crystal system can be made to vary in a predictable manner by mixing with the system a substance which is miscible with it, and chemically inert towards it. Thus, for example, a system which without the additive clears at a fixed temperature will clear at a lower temperature when mixed with the specific additive. As more and more of the additive is mixed with the composition, the clearing point becomes progressively lower until the point where sufficient additive has been mixed with the system to destroy its liquid crystalinity with the result that the system no longer manifests cholesteric properties. Surprisingly, this change in clearing point with increasing amounts of additive is essentially linear over a rather wide range of temperature with most systems, so that a plot of clearing point temperature against percent by weight is a straight line with a descending slope over a wide range of temperatures. The preferred compositions within the scope of this invention are those in which there is such linearity.

The preferred additives for use with the liquid crystals of this invention are hydrocarbon fractions such as petrolatum. These materials are chemically inert and miscible with liquid crystal systems. They are of sufficiently low volatility so that they do not evaporate during mixing or in storage. This is especially important where the compositions are to be used for measuring relatively high temperatures, as in chemical thermometers. For low temperature compositions, it is not so important. Especially preferred are mineral oil fractions having boiling points under atmospheric conditions of at least 150°F, and semisolid fractions such as petroleum jelly. These materials are readily available in highly purified forms at reasonable cost.

While hydrocarbon fractions are preferred, a wide variety of other inert materials may also be employed. These include, for example, ethers, alcohols, esters, amines, ketones, nitro organic compounds and pyrroles. The principal characteristics of the additives which can be employed in this invention are that they are miscible with the liquid cyrstal system, and that they are chemically inert both with respect to the liquid crystal system and the environment.

Illustrative non-limiting examples of the inert misable additives suitable for use in depressing the clearing point of the liquid crystal system are p-Nitrophenylphenyl ether, dodecyl alcohol, di-(2-Ethylhexyl) maleate, tri-n-octylamine, diethyl phthalate, hexyl ether, butoxy ethyl ether, nitrobenzene, phenyl ether, acetophenons, 2-ethylhexanol, cyclohexanone, bis (2-mexhoxy methyl) ether, n-methyl pyrrole, 9-heptadecanone, N. n-diethylaniline, mineral oil, vaseline, fluorolube S-30, chlorinated paraffin and polyisobutylene.

As aforesaid, it is preferred to operate in the area of linearity. Thus, to cover an extremely wide range of temperatures, say from 0° to 300°F or even higher, it is preferred to prepare a limited number of systems and to vary their clearing points by the addition of additives within the range where the plot is linear. Utilizing such inert, misable substances only a limited number of compositions need be prepared in contrast to the large number previously required. For example, the temperature range from 90° to about 125°F can be covered with only two systems. A system containing 58.76% cholesteryl oleyl carbonate (OCC), 29.72% cholesteryl chloride (CC) and 11.52% cholesteryl-4-n-butoxy phenyl carbonate (nBPC) with up to 5.67% mineral oil will cover the temperature range from 96.5° to 125°F, and the system 71.23% OCC, 22.54% CC and 6.23% nBPC with up to 4.8% mineral oil will cover the range 90° to 116°F. With the former system the color change at the clearing points is from yellow -green to colorless, and with the latter system it is from green to colorless. The important point to note is that the composition of the liquid crystal system does not vary. Only the amount of inert additive varies.

In describing the systems herein, the percent of each component in the system is by weight based on the total weight of the system. The percent of the inert, misable additive is by weight based on the total weight of the composition.

The process of the 3,974,317 patent is applicable to a wide variety of liquid crystal systems. From the point of view of ready availability and economics, it is most useful with systems containing a cholesteryl halide, particularly the chloride, cholesteryl oleyl carbonate and an ester such as cholesteryl 4-n-butoxy phenyl carbonate or cholesteryl nonanoate. It is not however limited to these systems, and may be advantageously employed with many systems of which the following are illustrative.

68.8% Cholesteryl oleyl carbonate, 19.4% Cholesteryl chloride, 11.8% Sitosteryl p-n-pentyloxbenzoate -Clearing point 118.4°F

71.3% Cholesteryl oleyl carbonate, 19.9% Cholesteryl chloride, and 17.8% Sitisteryl-10-undecenoate -Clearing point 95.90°F

67.9% Cholesteryl oleyl carbonate, 19.3% Cholesteryl chloride, and 12.9% Sitosteryl octanoate Clearing point 95.9°F

50.7% Cholesteryl oleyl carbonate, 20.7% Cholesteryl nonanoate, and 28.6% Sitosteryl acetate Clearing point 93.2°F

50.7% Cholesteryl oleyl carbonate, 20.7% Cholesteryl nonanoate, and 28.6% Sitosteryl propionate Clearing point 95.9°F

55.6% Sitosteryl Erucate, 22.2% Sitosteryl p-n pentyloxy benzoate, and 22.2% Cholesteryl Chloride Clearing point 88.7°F

41.7% Sitosteryl Erucate, 41.7% Sitosteryl 3,4-dichorobenzate, and 16.6% Sitosteryl Chloride Clearing point 71.6°F

59.2% Cholesteryl oleyl carbonate, 24.2% Cholesteryl nonanoate, and 16.6% Sitosteryl Chloride Clearing point 96.8°F

50.7% Cholesteryl oleyl carbonate, 20.7% Cholesteryl nonanoate, and 28.6% Sitosteryl Chloride Clearing point 100.40°F

Cholesteryl oleyl carbonate, 71.23%, Cholesteryl chloride 22.54%, Cholesteryl 4-n-butoxy phenyl carbonate, 6.23% - Clearing point 114.97°F Cholesteryl oleyl carbonate, 58.65%, Cholesteryl Chloride, 29.93%, Cholesteryl 4-n-butoxy phenyl carbonate, 11.42% Clearing point 128.26°F

Cholesteryl oleyl carbonate, 56.72%, Cholesteryl Chloride, 29.93%, Cholesteryl 4-n-butoxy phenyl carbonate, 11.65% - Clearing point 132.66°F

Cholesteryl oleyl carbonate, 74.65%, Cholesteryl chloride, 18.74%, Cholesteryl laurate 6.60% Clearing point 109.60°F

The clearing points given are those of the systems without the inert, misable additive, and are indicative of the ranges which can be achieved with suitable additives.

The compositions of this invention can be used to prepare a variety of thermometric elements suitable for recording changes in temperature by a visual color change by forming one or a plurality of separate layers of the compositions on a suitable substrate. In carrying out the process of U.S. patent 3,974,317, the thickness of the layer of thermometric compositions used in this invention is generally from about 15 to 125 microns. It has been observed that if the thickness is appreciably above 125 microns the temperature response may be delayed. If the thickness is below 15 microns, it starts to approach the lattice dimensions of the crystals with the result that the cleaning point temperature for a particular composition may be somewhat lower than the temperature of the same composition in a thicker layer or in bulk.

Products containing the compositions of this invention because they are hysteretic have especial utility in recording the highest temperature to which an object has been exposed or which exists in the object. Thus, the thermometric element can be utilized in maximum temperature thermometers, especially in clinical thermometers. The range for the transition temperature would be chosen to be between the normal oral or other temperature to be measured and the highest temperature to which sensitivity is desired. Such a thermometer could be inserted in the patient's mouth for a short period of time, removed and read.

4

It will be appreciated by those skilled in the art that the base upon which the thermometric composition is coated can be any solid material. If the material would tend to absorb or to adversely affect the thermometric composition, it can first be coated with a thin film of an inert material. The coating or coatings covering the thermometric composition must of course be sufficiently transparent or translucent in the thin layers used that the color change can be visually detected, unless the substrate is itself transparent.

The substrate can consist of a wide variety of substances including rigid or semi-rigid materials like cellulose acetate, cellulose acetate butyrate, polyvinyl chloride, polyesters, polyethylene, paper, polyvinyl alcohol coated paper, lacquer coated paper, polyvinyl alcohol film, glass, saran, and the like.

The top coat can consist of the same substances as the substrate but could also include materials added over the substrate and composition in the manner descirbed in U.S. Pat. No. 3,619,254.

The cholesteric composition is preferably deposited in the substrate or substrate and base combination as a thin film or layer. It will be appreciated from the present description that the cholesteric composition can be placed in a square, rectangular, other polygonal, round, elliptical, or other geometric figure such as numerals, letters, symbols and the like, depending upon the type of thermosensing device required.

The cholesteric composition can be applied to the substrate in any convenient manner. For example, the composition can be coated or deposited on the substrate by silk screening, letterpress, printing, lithography, offset, spraying, pouring, pumping, brushing, with a doctor blade and/or roller mill, or by other conventional methods.

It will be appreciated by those skilled in the art who have reference to this disclosure that electronic devices, printed circuit boards, light fixtures, electrical wiring, and other artifacts which are either temperature sensitive, or the failure of which produces a temperature rise, can similarly be monitored.

A particularly useful embodiment of the invention is one in which the compositions are arrayed on a flexible substrate backed with adhesive. The product can be affixed to the human body, for example a patient's forehead and the temperature monitored without disturbing the patient. In this case, the substrate is preferably a good heat conductor such as a foil of plastic coated aluminum.

Specific examples of preferred misable, inert additives are described below:

1. Mineral Oil - Off-the-shelf drug store stock material under the label of E. R. Squibb & Sons, Inc. of Princeton, N. J.

2. Vaseline - Trademarked product under the label of Cheesebrough-Ponds, Inc. of New York, N.Y. Sublabeled as "pure petroleum jelly." This is an off-the-shelf drug store stock item.

3. Fluorolube S-30 - This additive is a product of Hooker Chemical Corporation of Niagara Falls, N.Y. It is a polymer of trifluorovinyl chloride. It exists as a water-white liquid with a viscosity of 190 centipoise at 100° F. This additive is also known as a polymonochlorotrifluoro ethylene.

4. Chlorinated Paraffin - A product of Pearsall Chemical Corporation of Phillipsburg, N.J. It is a mixture of normal and branched-chain hydrocarbons containing 19 to 22 carbon atoms and chlorinated 41-43 percent by weight.

5. Polyisobutylene - This additive is a product of The Lubrizol Corporation of Cleveland, Ohio. It is sold under the name LUBRIZOL 3140 (SS No. 32505) and is utilized in the automotive lubrication industry as a Viscosity Index improper.

The dyes useful in the practice of this invention must be soluble in at least one of (1) the cholesteric liquid crystal or (2) the inert additive compound miscible with the liquid crystal. In a preferred embodiment the dye is soluble in the liquid crystal.

The preferred dyes for use in this invention are those that are oil soluble, can be purified to levels of at least 85%, are stable to moisture, oxygen, carbon dioxide and light, and impart significant color to the liquid crystal systems, even when viewed through light paths of only 0.1 to 0.2 mm thickness when present at concentrations of 0.05 to 0.2 percent by weight. A further requirement of the dye combination is that it absorbs substantially all the visible light which impinges on it when the liquid crystal system containing the dye combination is in its isotropic liquid state; i.e., the dyed liquid crystal system should appear black, dark gray, dark brown, purple, or some other dark color when the thermometric liquid crystal system is at a temperature which exceeds its transition point. A further requirement is that the dyed liquid crystal system reflect some band of visible light when the thermometeric liquid crystal system containing the dyes is below the temperature of its transition.

The preferred dyes of this invention belong to the class of azo dyes containing at least one $R_1N = N$-$R_2$ group, where $R_1$ and $R_2$ can be substituted or unsubstituted aromatic moceties, e.g., benzenes or naphthlenes. One such combination of dyes which satisfy all the criteria set forth above consist of Sudan Black B (C.I. 26150) sometimes called Solvent Black 3 and Sudan II (C.I. 12140) sometimes referred to as Solvent Orange 7. Other dyes which work in combination with Sudan Black B are Methyl Red, Sudan I (C.I. 12055), Sudan III (C.I. 26100), Sudan IV (C.I. 26105) and Sudan Red 7B (C.I. 26050).

Both the concentrations and the ratio of concentrations of the dyes are critical for this invention. The preferred operative range of concentration of the individual dyes is from 0.01 to 0.20 percent by weight. A more preferred range is from 0.02 to 0.15. The optimal concentrations depend on the choice of dyes, and for the combination of Sudan Black B and Sudan II would be 0.08 and 0.04 % by weight respectively.

An illustrative procedure which can be used to select dye combinations suitable for use in the practice of this invention is as follows:

1. Select an oil soluble dye available at a purity level of at least 85% which has a maximum absorption band in the range of 540 to 640 nanometers, preferably 580-640 nanometers. Sudan Black B, Oil Blue N, Nile Blue A, Methylene Blue, Azure A and Fast Green satisfy these criteria.

2. Attempt to dissolve the dye in the liquid crystal system to a level of 0.2% by weight. This step is accelerated if the liquid crystal system is brought to a temperature between 60 and 100°C. Of the examples of dyes cited in 1. only Methylene Blue and Azure A fail to satisfy the minimum solubility criterion.

3. Prepare a thin section of the dyed liquid crystal of from 0.1 to 0.2 mm thick which has been cooled to a temperature below the transition temperature and note the color both below and above the transition temperature with light reflected from a white surface on which the thin layer of dyed liquid crystal is coated. At a thickness of 0.2 mm and a dye concentration of 0.2%, substantial color must be reflected from the liquid crystal system. Of the examples cited above, only Sudan Black B and Oil Blue N satisfy this criterion.

4. Select another oil soluble dye available at a purity level of at least 85% which has a maximum absorbence band in the range of about 380 to 520 nanometers; preferably 400-520 nanometers; more preferably 480 to 520 nanometers. Sudan I, Sudan II, Sudan III, Sudan IV, Methyl Red and Eriochrome Black T satisfy these criteria.

5. Repeat step 2. on the second dye component.

6. Repeat step 3. on the second dye component.

7. Prepare a section of from 0.1 to 0.2 mm in thickness of the liquid system containing the two dyes selected from steps 1. through 6. at a total dye concentration of 0.1 to 0.2% and in varying ratio of the dyes covering the range 4:1 to 1:4. Test this composition for intensity and contrast of the reflected light when it is coated on a white background both in the liquid crystal and the isotropic state.

8. If there is insufficient absorbence in the range of 400 nanometers, a third dye can be selected by following the procedure of steps 1., 2., 3., and 7. above. Usually, at least one of the two dyes selected by the above procedure contains a secondary absorption band in the range of 400 nanometers, making the selection of a third dye component superfluous.

Generally, the temperature at which liquid crystals change color is referred to as the "clearing point" because the liquid crystals change from a reflected color to a clear or gray coloring. The systems of this invention change from a first reflected color to a grey, brown or black which is visible against a white background because of the dye combinations utilized. As used in the specification and claims the temperature at which the color change occurs will be referred to as the transition temperature.

In preparing the composition of this invention the dyes suitable for use to achieve the desired color change illustrative non-limiting examples of dyes having a maximum absorption of between 540 and 640 nanometers; preferably about 580 to about 640 nanometers, (hereinafter referred to as "first dye") are Sudan Black B and Oil Blue N. Illustrative non-limiting examples of dyes having a maximum absorption of between 480 and 520 nanometers (hereinafter referred to as "second dye") are Sudan I, Sudan II, Sudan III, Sudan IV, Sudan Red 7B and Methyl Red.

At least one first dyes is utilized in combination with at least one second dye. Each of the foregoing second dyes can be utilized in conjunction with Sudan Black B. A particularly advantageous combination can be prepared utilizing Oil Blue N as the first dye in combination with Sudan II and Sudan III.

Each first and second dye can be utilized at about 0.01 to about 0.25 wt. % based on the weight of the cholesteric liquid crystal. Preferably the dyes are utilized at about 0.02 wt. % to about 0.2 wt. %; more preferably about 0.04 to about 0.1 wt. % e.g., about 0.05 to about 0.08 wt. %. The ratio of first dye to second dye can be about 1:4 to 4:1, preferably about 1:1 to about 4:1 more preferably about 3:1, most preferably 2:1. Where the first dye is in excess, the system displays a color above the transition temperature of black, brown, gray or purple. When the second dye is used in excess, the color displayed above the transition temperature is usually the color of the second dye.

In order to illustrate the effect produced by the combination of this invention a liquid crystal system comprising 55.6% by weight of cholesteryl oleoyl carbonate, 30.59 wt. % cholesteryl chloride and 13.44 wt. % cholesteryl -4-n-butoxyphenyl-carbonate was prepared. This composition has a clearing point of 132.5°F. As described in U.S. Patent No. 3,974,317 mineral oil can be added to this cholesteric liquid crystal system to yield different compositions having clearing points within the clinical range. The slope of the curve representing clearing point temperature as a function of weight percent mineral oil utilized is about 5.55°F per one percent change in mineral oil content of the composition. Hence, a composition containing 6.00 wt. % mineral oil has a clearing point of 99.2°F while a composition comprising 6.04 wt. % mineral oil has a clearing point of 99.0°F. When the dyes of this invention are utilized in such compositions the resulting transition temperature at which the system turns from green to black is substantially the same as the clearing point of the mineral oil/chloesteric liquid crystal system without the dyes.

The slope of clearing point vs weight percent inert additive, e.g., mineral oil is the same with or without the dyes of this invention. However, when the dyes are utilized the curve is displaced about 0.2°F downward.

All of the compositions of the aforementioned cholesteric liquid crystals, mineral oil and dyes are green below the transition temperature and black or dark brown above the transition temperature. Because the color change is not subjective even at temperature resolutions of 0.2°F, these compositions are ideally suited for a clinical thermometer utilizing a white background.

Table I shows typical compositions of dyes in the cholesteric liquid crystal/mineral oil composition. As can be seen a wide range of dyes results in effective color change at the transition temperature against a white background. Sudan Orange G has a maximum absorption at 388 nanometers. From the results obtained, while the color change is observable, the preferred lower absorption band level for the second dye is preferably at least 400 nanometers.

Because the compositions of this invention are hysteretic, they have special utility in recording the highest temperature to which a thermometer containing elements comprising the compositions of this invention has been exposed. Thus, they are suitable for use in clinical thermometers. The compositions of this invention exhibit fully reversible color change, and hence, are reuseable. Furthermore, this reversibility eliminates shipping and storage problems associated with other clinical thermometers. Most significantly, the compositions of this invention can be utilized with a white background rather than the black background conventionally used with liquid crystals.

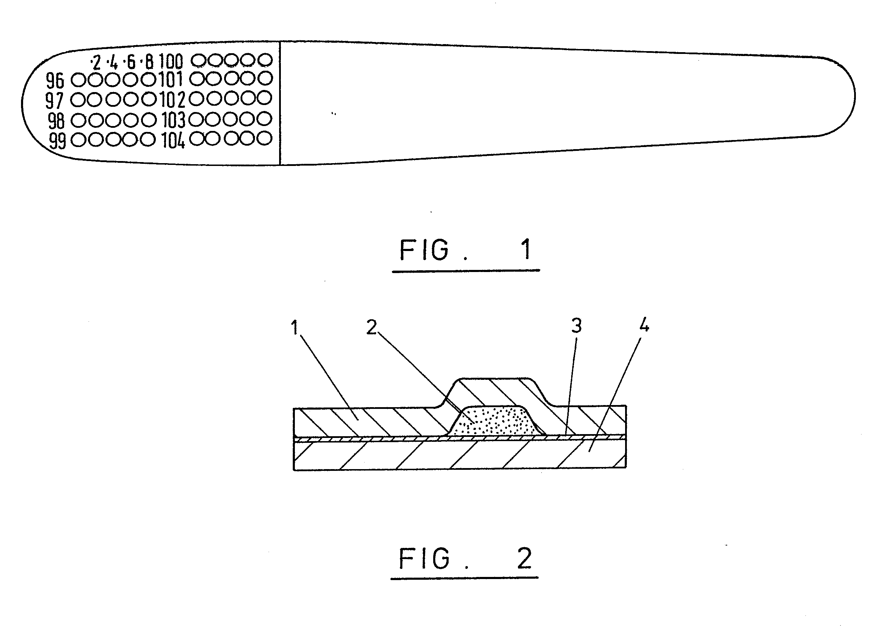

The compositions of this invention may be utilized in a clinical thermometer. Figure 1 illustrates a Fahrenheit clinical thermometer having two arrays of pockets containing the temperature sensing composition of this invention. The first (right hand) array comprises 25 pockets containing compositions having a transition temperature 0.2°F different from each adjacent pocket. The second (left hand) array is similar except that it contains 20 pockets. Together, the tow arrays cover the temperature range 96.0 to 104.8°F.

The composition in each pocket is identical to all others with respect to liquid crystal composition and dyes used. In a preferred embodiment, the only variable is the amount of misable, inert additive which is utilized in accordance with the teachings of U.S. patent No. 3,974,317. The composition need not include the misable inert additive. As has been stated, where the additive is mineral oil, the slope of the curve representing clearing point as a function of weight percent mineral oil is about 5.55°F per one percent change in mineral oil content. This curve can be utilized to determine the mineral oil component of each pocket. The curve is illustrated in Figure III

Figure II shows an elevation view of a single pocket of the thermometer. The compositional structure and a method of manufacturing an all plastic thermometer are disclosed in U.S. patent No. 4,064,872. Any of a variety of thin, flexible, preformed polymer films may be used to prepare the thermometer of this invention. Illustrative non limiting examples of the materials which may be used are polyethylene polypropylene, polyesters such as polyethylene terephthalate, cellulose acetate, etc.

The structure of such thermometers will conventionally have an opaque substrate into which pockets are embossed to receive the liquid crystal compositions, and a transparent cover layer. However, in a preferred embodiment, the substrate is transparent, and the liquid crystals is viewed through the transparent substrate. In a particularly advantageous construction, the embossed pockets, rather than having a flat bottom portion, have a curved bottom section which acts as a lens to intensify the color display.

The substrate and cover strip can be bonded together by heat sealing or adhesive bonding. The side opposite the viewing side must be rendered substantially opaque. This accomplished in the practice of this invention by utilizing an additional substantially opaque layer.

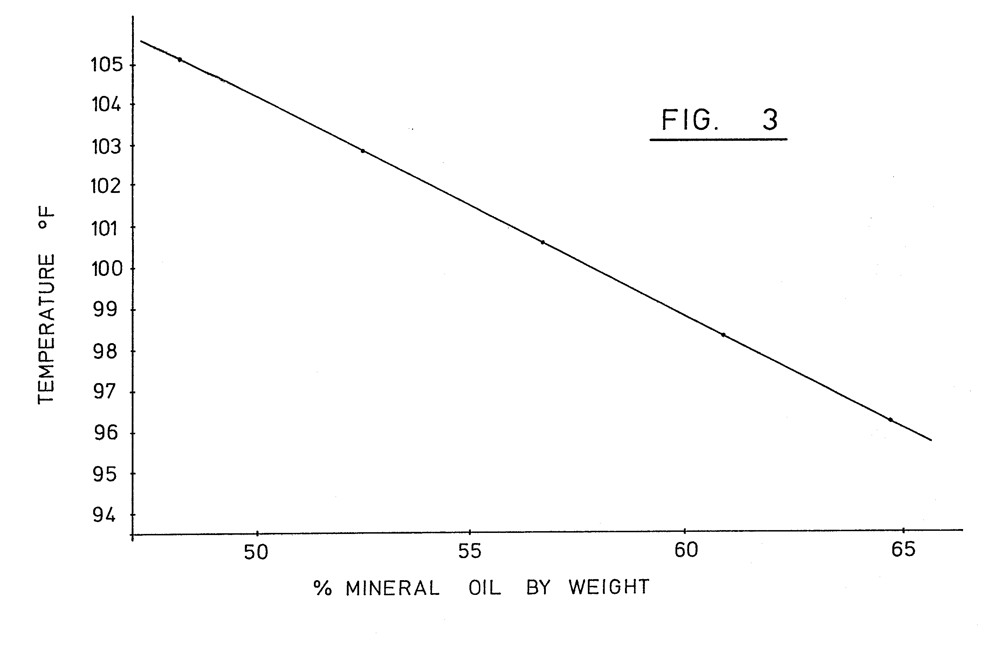

Referring now to Figure 2, a pocket of the thermometer is illustrated in a cross section elevation view. The transparent substrate, 1, is embossed to contain therein a pocket in which the liquid crystal composition, 2, is deposited. A cover strip, 3, is heat sealed to the substrate, 1. An opaque layer, 4, is then adhered to the cover strip, 2. The liquid crystal composition is then viewed from the substrate side as shown by the arrow.

A typical structure of the thermometer can be as follows:

1. Transparent substrate

Eastman Plastics Kodar PETG 6763 Copolyester; 0.005-0.015 inch thickness which is believed to be a Polyethylene terephthalate ester.

2. Liquid Crystal System

Dye: Sudan Black B 0.05-0.10 Wt. %

Sudan II 0.025-0.05 Wt. %

Liquid Crystal

Cholestcryloleoyl carbonate    -55.6 wt %

Cholesteryl chloride    -30.9 wt %

4-n-butoxy phenyl carbonate    -13.44 wt %

Mineral oil    - QS

3. Cover Strip

Dupont Type 50 M-24, a PVDC coated polyester film 0.0005 inch

4. Opaque Layer

Polyethylene, polypropylene or polyester. 0.0005-0.025 inch

The opaque layer is preferably filled with a white pigment, e.g., $TiO_2$ and is adhesive bonded to the cover strip. It will be appreciated by those skilled in the art who have reference to this disclosure, that if the liquid crystal system is to be viewed from the cover strip side, the opaque layer will be adhered to the substrate.

## TABLE I

| Example No. | Dye | Dye* Color | Dye Con-** centration | Color of Combination above transition temperature |
|---|---|---|---|---|
| 1 | Sudan Black B | Blue | 0.08 | Black |
|   | Sudan II | Yellow | 0.04 | |
| 2 | Sudan Black B | Blue | 0.1 | Brown |
|   | Sudan I | Yellow-Orange | 0.1 | |
| 3 | Sudan Black B | Blue | 0.1 | Black |
|   | Metyl Red | Red | 0.05 | |
| 4 | Sudan Red 7B | Red | 0.1 | Purple |
|   | Sudan Black B | Blue | 0.1 | |
| 5 | Sudan Black B | Blue | 0.1 | Black |
|   | Sudan III | Orange-Red | 0.05 | |
| 6 | Sudan Black B | Blue | 0.1 | Black |
|   | Sudan IV | Red | 0.1 | |
| 7 | Oil Blue N | Blue | 0.2 | Grey |
|   | Sudan II | Yellow | 0.1 | |
|   | Sudan III | Orange-Red | 0.1 | |
| 8 | Oil Red EGN | Red | 0.1 | Violet-purple |
|   | Sudan Black B | Blue | 0.1 | |
| 9 | Oil Red EGN | Red | 0.1 | Violet-purple |
|   | Oil Blue N | Blue | 0.1 | |
| 10 | Sudan Orange G | Yellow | 0.1 | Dull dark green*** |
|   | Sudan Black B | Blue | 0.1 | |
| 11 | Sudan Orange G | Yellow | 0.1 | Dull dark green*** |
|   | Oil Blue N | Blue | 0.1 | |
| 12 | Oil Red O | Orange | 0.1 | Purple |
|   | Sudan Black B | | 0.1 | |
| 13 | Oil Blue N | Blue | 0.15 | Gray |
|   | Sudan III | Orange-Red | 0.1 | |

* Color of individual dyes below transition temperature. The combination displays a green color below the transition temperature.

** Dye concentration is based on dye as received and not pure dye.

*** Initial color is bright green.

## Claims

1. A temperature sensing composition characterised in that it comprises at least one cholesteric liquid crystal, at least one first dye having a maximum absorption band of about 540 to about 640, and at least one second dye having a maximum absorption band of about 380 to about 540, said first and second dyes being miscible with either 1) the cholesteric liquid crystal or 2) a liquid composition inert to said liquid crystal and miscible with the liquid crystal.

2. A composition according to claim 1 characterised in that the ratio of the first dye to the second dye is about 1:1 to about 4:1.

3. A composition according to claim 1 characterised in that the ratio of the first dye to the second dye is about 2:1.

4. A composition according to any of the preceding claims characterised in that a liquid which is inert to the cholesteric liquid crystal and miscible therewith is included.

5. A composition according to any of the preceding claims characterised in that the inert liquid is present in an amount sufficient to depress the clearing point of the cholesteric liquid crystal from an initial transition temperature in the absence of said inert liquid to a predetermined temperature below said initial temperature.

6. A composition according to any of the preceding claims charactersed in that the inert liquid is mineral oil.

7. A composition according to any of the preceding claims characterised in that the first dye has a maximum absorption band of about 580 to about 640 nanometers.

8. A composition according to any of the preceding claims characterised in that the second dye has a maximum absorption of about 400 to 520 nanometers.

9. A composition according to any of the preceding claims characterised in that the second dye has a maximum absorption of about 480 to 520 nanometers.

10. A composition according to claim 1 characterised in that the first dye is an azo dye.

11. A composition according to claim 1 characterised in that the first dye is Sudan Black or Oil Blue N.

12. A composition according to any of the preceding claims characterised in that the second dye is Sudan I, Sudan II, Sudan III, Sudan IV, Methyl Red, Sudan Red 7B or mixtures thereof.

13. A composition according to any of the preceding claims characterised in that the first and second dyes are each utilized at about 0.01 to about 0.25 weight percent based on the cholesteric liquid crystal.

14. A composition according to any of the preceding claims characterised in that the first and second dyes are each utilized at about 0.02 to about 0.2 weight percent based on the cholesteric liquid crystal.

15. A composition according to any of the preceding claims characterised in that the first and second dyes are each utilized at about 0.04 to about 0.1 weight percent based on the liquid crystal.

16. A composition according to any of claims 1 to 9 characterised in that the first dye is Sudan Black B utilized at about 0.08 wt % and the second dye is Sudan II utilized at about 0.04 wt % based on the cholestric liquid crystal.

17. A composition according to any of claims 1 to 9 characterised in that the first dye is Sudan Black B utilized at about 0.1 wt % and the second dye is Sudan I utilized at about 0.1 wt %, Sudan III utilized at about 0.05 wt %, Sudan IV utilized at about 0.1 wt %, Sudan Red 7B utilized at about 0.1 wt % or Methyl Red utilized at about 0.05 wt %, all weight percentages being based on the cholesteric liquid crystal.

18. A composition according to any of claims 1 to 9 characterised in that the first dye is Oil Blue N utilized at about 0.2 wt % and the second dye is a mixture of Sudan II utilized at about 0.1 wt % and Sudan III utilized at 0.1 wt % based on the cholesteric liquid crystal.

19. A thermometer characterised in that it comprises:
    (a) a substrate;
    (b) a liquid crystal system deposited on said substrate comprising
    (1) at least one cholesteric liquid crystal, and
    (2) at least one first dye and at least one second dye, said first dye having a maximum absorption of about 540 to 640 nanometers and the second dye having a maximum absorption of about 380 to 520 nanometers;
    (c) a cover strip bonded to the substrate, thereby sealing the liquid crystal system into defined regions; and
    (d) an opaque layer.

20. A thermometer according to claim 19 characterised in that the opaque layer is the cover strip and the substrate is transparent.

21. A thermometer according to claim 19 characterised in that the opaque layer is adhesively bonded to the cover strip and the substrate is transparent.

22. A thermometer according to any of claims 19 to 21 characterised in that the substrate is embossed to contain a multiplicity of pockets each pocket containing a liquid crystal system having a transition temperature different from the liquid crystal system contained in a next adjacent pocket.

23. A thermometer according to any of claims 19 to 21 characterised in that the substrate is embossed to contain a multiplicity of pockets, each pocket containing a liquid crystal system differing from the liquid crystal system in a next adjacent pocket only in that the liquid crystal system includes an amount of inert additive miscible with the liquid crystal, whereby inclusion of the inert additive causes a depression of the transition temperature of the liquid crystal system relative to the same liquid crystal system in the absence of the additive, the amount of additive being adjusted from pocket to pocket so that each pocket contains a liquid crystal system having a different transition temperature from a next adjacent pocket.

24. A thermometer according to claim 23 characterised in that the inert miscible additive is mineral oil.

25. A thermometer according to claim 24 characterised in that the liquid crystal system comprises cholesteric liquid crystals in amounts of 55.6 wt % cholesteryl oleoyl carbonate, 30.59 wt % cholesteryl chloride and 13.44 wt % cholesteryl-4-n-butoxy-phenyl-carbonate based on the cholesteric liquid crystal.

26. A thermometer according to any of claims 19 to 25 characterised in that the first and second dyes are each present in an amount of about 0.01 to about 0.25 wt % based on the cholesteric liquid crystal.

27. A thermometer according to any of claims 19 to 25 characterised in that the first and second dyes are each present at about 0.04 to abut 0.01 wt % based on the cholesteric liquid crystal.

28. A thermometer according to any of claims 19 to 27 characterised in that the first dye is Sudan Black B and the second dye is Sudan III.

29. A thermometer according to claim 28 characterised in that the Sudan Black B is present at about 0.08 wt % and the Sudan II is present at about 0.04 wt % based on the cholesteric liquid crystal.

30. A thermometer according to any of claims 19 to 29 characterised in that the dyes are soluble in the cholesteric liquid crystal.

31. A thermometer according to any of claims 19 to 29 charactersied in that the dyes are soluble in the inert additive miscible with the liquid crystal.

0260923

FIG. 1

FIG. 2

FIG. 3

TEMPERATURE °F

% MINERAL OIL BY WEIGHT

0260923